# EUROPÄISCHE PATENTSCHRIFT

(11) **EP 4 062 592 B1**
(45) Veröffentlichungstag und Bekanntmachung des Hinweises auf die Patenterteilung: **27.08.2025**
(21) Anmeldenummer: 20816120.8
(22) Anmeldetag: 18.11.2020
(51) Int. Cl.: H04L 12/40, H04L 12/12, G05B 19/418, H04L 12/28

(54) **FERNAKTIVIERUNG DER WIRELESS-SERVICE-SCHNITTSTELLE EINES STEUERGERÄTES DURCH EIN PERIPHERIEGERÄT**
REMOTE ACTIVATION OF THE WIRELESS SERVICE INTERFACE OF A CONTROL DEVICE USING A PERIPHERAL DEVICE
ACTIVATION À DISTANCE DE L'INTERFACE DE SERVICE SANS FIL D'UN DISPOSITIF DE COMMANDE UTILISANT UN DISPOSITIF PÉRIPHÉRIQUE

(30) Priorität: 19.11.2019 DE 102019217772
(43) Veröffentlichungstag der Anmeldung: 28.09.2022
(73) Patentinhaber: Siemens Schweiz AG, 8047 Zürich (CH)
(72) Erfinder: KYBURZ, Beat, 8913 Ottenbach (CH); MEIER, Herbert, 6340 Baar (CH)
(74) Vertreter: Siemens Patent Attorneys
(86) Internationale Anmeldenummer: PCT/EP2020/082572
(87) Internationale Veröffentlichungsnummer: WO 2021/099410

(56) Entgegenhaltungen:
- EP-A1- 3 393 149
- EP-A1- 3 432 276
- EP-A1- 3 518 610

## Beschreibung

Die Erfindung betrifft ein Steuergerät für die Steuerung von einem oder mehreren Feldgeräten, die durch ein Kommunikationsnetzwerk, insbesondere durch einen Feldbus, mit dem Steuergerät datentechnisch verbunden sind. Die Erfindung betrifft weiterhin ein Verfahren zum Übertragen von Daten auf ein Steuergerät für die Steuerung von einem oder mehreren Feldgeräten, die durch ein Kommunikationsnetzwerk, insbesondere durch einen Feldbus, mit dem Steuergerät datentechnisch verbunden sind.

Die Inbetriebnahme von Gebäudeautomatisierungssystemen für Heizung, Lüftung, Klima etc. erfordert das effiziente Laden von grösseren Datenmengen (z.B. Applikationssoftware, Parametrierdaten, Textbibliotheken, UI-Graphiken für die Benutzerschnittstelle) auf die dazu benötigten Steuergeräte (z.B. Controller, Automatisierungsgeräte). Häufig ist zudem bei der Inbetriebnahme oder bei der Wartung der Steuergeräte ein Update der Firmware (für Bugfixes, Security-Updates oder funktionale Erweiterungen) erforderlich.

Zum Zeitpunkt der Inbetriebnahme von Steuergeräten (z.B. IP basierten Controllern) für eine Gebäudeautomatisierung, die über ein Internet Protocol (z.B. IPv4, IPv6) kommunizieren, ist das IP-Gebäudenetzwerk (Backbone) häufig noch nicht betriebsbereit und das effiziente Laden grösserer Datenmengen über den Backbone ist somit nicht möglich.

Die europäische Anmeldung EP3393149A1 offenbart ein Verfahren und eine Anordnung zum Aktivieren einer drahtlosen Kommunikationsverbindung, wobei die drahtlose Verbindung aktiviert wird durch das Erkennen des Öffnens einer Zugangstür, wobei das Bereitstellen eines Zugangs zu dem Raum und das Aktivieren der drahtlosen Kommunikationsverbindung als Reaktion auf das Erkennen des Öffnens der Zugangstür erfolgt.

Die europäische Anmeldung EP3518610A1 offenbart ein Service-Tool (Service-Werkzeug) mit einer drahtlosen Zugangsschnittstelle, wobei die drahtlose Zugangsschnittstelle als Reaktion auf eine drahtlose Zugriffsanforderung, die durch das Servicetool initiiert wurde, aktiviert werden kann, damit das Service-Tool drahtlosen Zugriff auf eine oder mehrere Funktionen einer Aufzugssteuerung erhält.

Die europäische Anmeldung EP3432276A1 offenbart ein Steuersystem für ein Smart Lock (intelligentes Schloss), wobei das Smart Lock konfiguriert ist, einen Weckbefehl über eine geeignete Schnittstelle zu erhalten, um eine Funkverbindung für ein mobiles Gerät eines Benutzers zu aktivieren.

Das Laden von grösseren Datenmengen auf Steuergeräte mit "non IP Gebäudenetzwerk" (z.B. BACnet MSTP Backbone) ist aufgrund der geringen Übertragungskapazität generell sehr ineffizient und würde für eine Inbetriebnahme viel zu lange dauern (z.B. Stunden für einen Firmwareupdate).

Prinzipiell könnten über eine lokale USB Schnittstelle am Controller (Steuergerät) grössere Datenmengen auf den Controller effizient geladen werden. Die Controller für Automationssysteme sind jedoch häufig an schlecht zugänglichen Standorten installiert (z.B. in der Zwischendecke, in Fensterpanelen oder im Zwischenboden) und das Anbringen eines USB Kabels zwischen Tool und Controller ist mühsam und zeitraubend. Zudem ist die Länge von USB Kabeln auf wenige Meter begrenzt.

Es ist daher die Aufgabe der vorliegenden Erfindung, ein Steuergerät bereitzustellen, auf das grössere Datenmengen effizient geladen werden können. Weiterhin ist es die Aufgabe der vorliegenden Erfindung ein Verfahren zum effizienten Laden von grösserer Datenmengen auf ein Steuergerät, insbesondere für eine Gebäudeautomatisierung, bereitzustellen.

Die Aufgabe wird gelöst durch ein Steuergerät (z.B. Controller, Automatisierungsgerät), für eine Gebäudeautomatisierung, für die Steuerung von einem oder mehreren Feldgeräten, die durch ein Kommunikationsnetzwerk, insbesondere durch einen Feldbus, mit dem Steuergerät datentechnisch verbunden sind, wobei das Steuergerät eine drahtlose Serviceschnittstelle (Wireless-Service-Schnittstelle, z.B. WiFi-Schnittstelle) umfasst, wobei das Steuergerät eingerichtet ist, ein von einem Feldgerät (Peripheriegerät) generiertes Servicesignal zu empfangen und basierend auf dem Servicesignal die drahtlose Serviceschnittstelle (Wireless-Service-Schnittstelle, z.B. WiFi-Schnittstelle) zu aktivieren (bzw. einzuschalten). In der Gebäudeautomatisierung ist ein Feldgerät (z.B. Aktor oder Sensor) genau einem Steuergerät (z.B. Controller) zugeordnet. Dadurch ist sichergestellt, dass ein von einem Feldgerät generiertes Servicesignal vom dazugehörigen Steuergerät (d.h. vom Controller, der das Feldgerät ansteuert) empfangen wird. Die Feldgeräte haben in der Regel einen Service-Pin oder eine Programmiertaste. Beim Betätigen von Service-Pin bzw. Programmtaste erzeugt das Feldgerät eine feldbusspezifische Meldung (Servicesignal) für Service- und Inbetriebnahme-Zwecke, welche zum entsprechenden Controller gesendet wird.

Durch diese einfache und eindeutige remote Aktivierung (Fernaktivierung) der lokalen Wireless-Service-Schnittstelle kann z.B. ein Servicetechniker oder Facility Manager sehr schnell, effizient und sicher den richtigen Controller für den Raum identifizieren (lokalisieren) und direkt mit dem schnellen Download der erforderlichen Daten auf den entsprechenden Controller beginnen. Der Gebäudebackbone (d.h. das Backbone-Netzwerk im Gebäude, z.B. ein IP-Netzwerk) muss dazu nicht betriebsbereit sein. Eine zeitaufwendige Lokalisierung des Controllers an schlecht zugänglichen Standorten und das Entfernen von Zwischendecken, Fensterpanelen oder Zwischenböden zum Anbringen eines USB-Kabels am Controller oder zum Betätigen der Servicetaste am Controller (Steuergerät) entfällt. Serviceeinsätze im laufenden Betrieb werden deutlich vereinfacht und beschleunigt, weil die Daten mit hoher Geschwindigkeit über die Wireless-Service-Schnittstelle auf den Controller (Steuergerät) geladen werden können. Die Durchführung der Inbetriebnahme des Controllers und Servicearbeiten (z.B. Wartung, Aufspielen von Patches, Firmware-Update) werden erheblich schneller und zuverlässiger.

Optional ist das das Steuergerät eingerichtet, ein von einem Feldgerät generiertes Servicesignal zu empfangen und basierend auf dem Servicesignal die drahtlose Serviceschnittstelle zu aktivieren (wenn die drahtlose Serviceschnittstelle ausgeschaltet ist) und/oder zu deaktivieren (wenn die drahtlose Serviceschnittstelle eingeschaltet ist).

Eine Ausgestaltung der Erfindung liegt darin, dass das Steuergerät (Controller) eingerichtet ist, durch das empfangene Servicesignal die Betätigung einer lokal am Steuergerät befindlichen Servicetaste zu simulieren und dadurch die drahtlose Serviceschnittstelle zu aktivieren. Der Controller setzt dieses empfangene Servicesignal um, indem er auf dem Controller das Betätigen der lokalen Servicetaste simuliert, so wie wenn jemand lokal am Controller die Servicetaste betätigt hätte.

Eine weitere vorteilhafte Ausgestaltung der Erfindung liegt darin, dass nach Aktivierung der drahtlosen Serviceschnittstelle das Steuergerät eingerichtet ist, über die drahtlose Serviceschnittstelle (z.B. Funkschnittstelle, WLAN, WiFi) Daten zu empfangen und/oder Daten zu senden. Inbetriebnahme und Serviceeinsätze im laufenden Betrieb werden deutlich vereinfacht und beschleunigt, weil die Daten mit hoher Geschwindigkeit über die Wireless-Service-Schnittstelle auf das Steuergerät geladen werden können.

Eine weitere vorteilhafte Ausgestaltung der Erfindung liegt darin, dass das Steuergerät eingerichtet ist, nach Empfangen oder Senden der Daten, die drahtlose Serviceschnittstelle automatisch zu deaktivieren. Durch das automatische Ausschalten der Wireless-Service-Schnittstelle mittels Timeout entfällt die manuelle Deaktivierung durch den Service-Techniker (welche oft vergessen wird) nach Abschluss der Servicearbeiten.

Eine weitere vorteilhafte Ausgestaltung der Erfindung liegt darin, dass die drahtlose Serviceschnittstelle im Falle einer Nichtverwendung nach einer definierten Zeitperiode automatisch deaktiviert wird. Durch das automatische Ausschalten der Wireless-Service-Schnittstelle mittels Timeout entfällt die manuelle Deaktivierung durch den Service-Techniker (welche oft vergessen wird) nach Abschluss der Servicearbeiten.

Eine weitere vorteilhafte Ausgestaltung der Erfindung liegt darin, dass es sich beim Servicesignal um eine feldbusspezifische Meldung für Service- und Inbetriebnahme-Zwecke handelt, die durch Betätigen einer Programmiertaste oder eines Service-Pins an einem Feldgerät erzeugt wurde. Die Feldgeräte haben in der Regel einen Service-Pin oder eine Programmiertaste. Beim Betätigen von Service-Pin bzw. Programmtaste erzeugt das Feldgerät eine feldbusspezifische Meldung für Service- und Inbetriebnahme-Zwecke, welche zum Controller gesendet wird.

Eine weitere vorteilhafte Ausgestaltung der Erfindung liegt darin, dass das Steuergerät eingerichtet ist, ein von einem Feldgerät generiertes Servicesignal zu empfangen und basierend auf dem Servicesignal die drahtlose Serviceschnittstelle (SS) zu deaktivieren.

Die Aufgabe wird weiterhin gelöst durch ein Verfahren zum Übertragen von Daten auf ein Steuergerät (z.B. Controller, Automatisierungsgerät), insbesondere für eine Gebäudeautomatisierung, für die Steuerung von einem oder mehreren Feldgeräten, die durch ein Kommunikationsnetzwerk, insbesondere durch einen Feldbus, mit dem Steuergerät datentechnisch verbunden sind, wobei über ein von einem Feldgerät generiertes und an das Steuergerät gesendetes Servicesignal eine drahtlose Serviceschnittstelle (Wireless-Service-Schnittstelle, z.B. WiFi-Schnittstelle) des Steuergerätes aktiviert wird, wobei nach der Aktivierung der drahtlosen Serviceschnittstelle von einem Tool (z.B. Engineering-Tool, Inbetriebnahme-Tool) Daten über die drahtlose Serviceschnittstelle (z.B. WLAN, WiFi) auf das Steuergerät transferiert werden. Das Verfahren ist mit Infrastruktur, die sowie so schon vorhanden ist, leicht zu realisieren.

Eine weitere vorteilhafte Ausgestaltung der Erfindung liegt darin, dass durch das vom Steuergerät empfangene Servicesignal eine Betätigung einer lokal am Steuergerät befindlichen Servicetaste simuliert wird und dadurch die drahtlose Serviceschnittstelle des Steuergerätes aktiviert wird. Das Steuergerät (z.B. Controller, PLC, SPS) ist eingerichtet, dieses empfangene Servicesignal so umzusetzen, damit auf dem Controller das Betätigen der lokalen Servicetaste simuliert wird, so wie wenn jemand lokal am Controller die Servicetaste betätigt hätte.

Eine weitere vorteilhafte Ausgestaltung der Erfindung liegt darin, dass nach dem erfolgten Transfer der Daten die drahtlose Serviceschnittstelle automatisch deaktiviert wird. Durch das automatische Ausschalten der Wireless-Service-Schnittstelle mittels Timeout entfällt die manuelle Deaktivierung durch den Service-Techniker (welche oft vergessen wird) nach Abschluss der Servicearbeiten.

Eine weitere vorteilhafte Ausgestaltung der Erfindung liegt darin, dass die drahtlose Serviceschnittstelle im Falle einer Nichtverwendung nach einer definierten Zeitperiode automatisch deaktiviert wird. Durch das automatische Ausschalten der Wireless-Service-Schnittstelle mittels Timeout entfällt die manuelle Deaktivierung durch den Service-Techniker (welche oft vergessen wird) nach Abschluss der Servicearbeiten.

Eine weitere vorteilhafte Ausgestaltung der Erfindung liegt darin, dass es sich beim Servicesignal um eine feldbusspezifische Meldung für Service- und Inbetriebnahme-Zwecke handelt, die durch Betätigen einer Programmiertaste oder eines Service-Pins an einem Feldgerät erzeugt wurde. Die Feldgeräte haben in der Regel einen Service-Pin oder eine Programmiertaste. Beim Betätigen von Service-Pin bzw. Programmtaste erzeugt das Feldgerät eine feldbusspezifische Meldung für Service- und Inbetriebnahme-Zwecke, welche zum Controller gesendet wird. Das Betätigen der Programmiertaste oder des Service-Pins am Feldgerät kann z.B. durch einen Servicetechniker erfolgen.

Eine weitere vorteilhafte Ausgestaltung der Erfindung liegt darin, dass über das von einem Feldgerät generiertes und an das Steuergerät gesendetes Servicesignal die drahtlose Serviceschnittstelle des Steuergerätes deaktiviert wird. Die WiFi Schnittstelle des Steuergerätes (z.B. Controller) kann somit via Feldbus nicht nur eingeschaltet, sondern über einen weiteren Befehl auch manuell ausgeschaltet werden.

Eine weitere vorteilhafte Ausgestaltung der Erfindung liegt in einer Anordnung, eingerichtet zur Durchführung des Verfahrens. Die Anordnung umfasst das erfindungsgemässe Steuergerät (Controller), entsprechend eingerichtete Komponenten (Feldgeräte, Tools, etc) und entsprechend geeignete Kommunikationsverbindungen (z.B. WLAN, Feldbus).

Die Erfindung sowie vorteilhafte Ausführungen der vorliegenden Erfindung werden am Beispiel der nachfolgenden Figur erläutert. Dabei zeigt:
- FIG 1: ein beispielhaftes Kommunikationsnetzwerk mit einem beispielhaften Steuergerät und Feldgeräten, und
- FIG 2: ein beispielhaftes Flussdiagramm für ein Verfahren zum Übertragen von Daten auf ein Steuergerät.

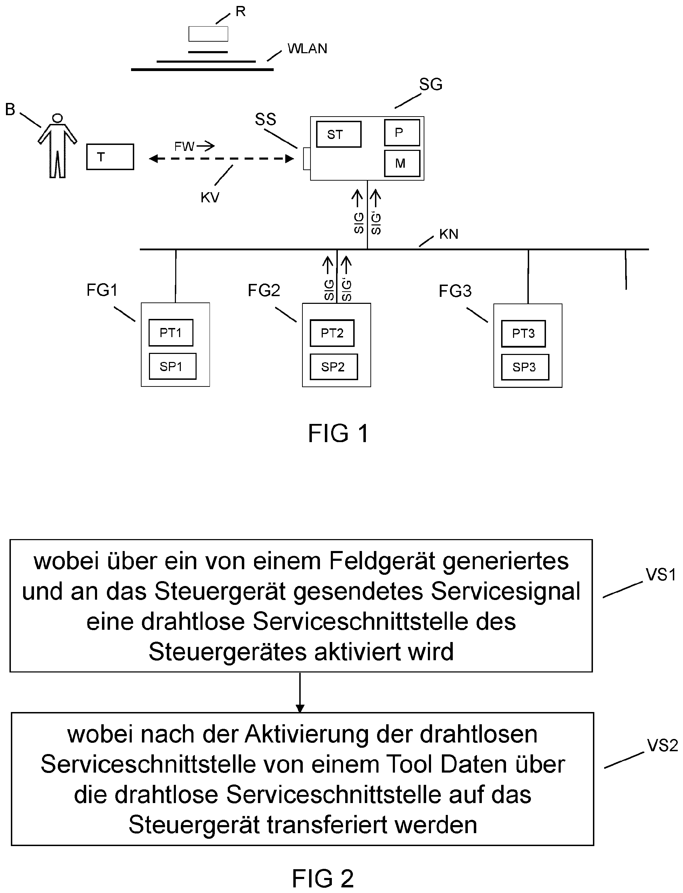

Figur 1 zeigt ein beispielhaftes Kommunikationsnetzwerk KN mit einem beispielhaften Steuergerät SG und Feldgeräten FG1 - FG3. Beim beispielhaften Steuergerät SG kann es sich z.B. um einen entsprechend eingerichteten Controller oder um ein Automatisierungsgerät (Automation Device) für eine Gebäudeautomatisierung handeln, z.B. für die Steuerung oder Regelungen von HLK-Funktionalität (Heizung, Lüftung, Klima) in einem Gebäude. Beim Kommunikationsnetzwerk KN handelt es sich mit Vorteil um einen Feldbus oder einen Installationsbus (z.B. KNX-Bussystem). Bei den Feldgeräten FG1 - FG3 handelt es sich z.B. um Aktoren (z.B. Antriebe für Markisen oder Storen, Dimmer, Temperaturanzeigen, Alarmmelder, etc.) oder Sensoren (z.B. Temperatursensoren, Temperaturfühler, Bewegungsmelder, Präsenzmelder, Dimmtaster, etc).

Das exemplarische Steuergerät SG gemäss Figur 1 ist für die Steuerung von einem oder mehreren Feldgeräten FG1 - FG3 eingerichtet, wobei die Feldgeräte FG1 - FG3 durch ein Kommunikationsnetzwerk KN (z.B. Feldbus oder Installationsbus) mit dem Steuergerät SG datentechnisch verbunden sind. Das Steuergerät SG umfasst eine drahtlose Serviceschnittstelle SS (z.B. Funkschnittstelle, WiFi-Schnittstelle), wobei das Steuergerät SG eingerichtet ist, ein von einem Feldgerät FG1 - FG3 generiertes Servicesignal SIG zu empfangen und basierend auf dem Servicesignal SIG die drahtlose Serviceschnittstelle SS zu aktivieren.

Jedes der Feldgeräte FG1 - FG3 umfasst eine entsprechende Programmiertaste PT1 - PT3 und/oder einen entsprechenden Service-Pin SP1 - SP3. Beim Betätigen von Service-Pin SP1 - SP3, bzw. beim Betätigen der jeweiligen Programmtaste PT1 - PT3 erzeugt das jeweilige Feldgerät FG1 - FG3 eine feldbusspezifische Meldung SIG für Service- und Inbetriebnahme-Zwecke, welche zum Steuergerät SG (Controller) gesendet wird.

In der Darstellung gemäss Figur 1 wird die feldbusspezifische Meldung, d.h. das Servicesignal SIG z.B. durch Betätigung der Programmiertaste PT2 am Feldgerät FG2 durch einen Benutzer B (z.B. Servicetechniker) generiert. Das Servicesignal SIG wird zum Steuergerät SG über das Kommunikationsnetzwerk KN (z.B. Gebäudeinstallationsbus) gesendet. Das Steuergerät SG ist dazu eingerichtet, ein Servicesignal SIG zu empfangen und entsprechend auszuwerten. Das Steuergerät SG umfasst einen Prozessor P zum Ausführen von Instruktionen von Programmen (insbesondere Software (z.B. Applikationen) oder Firmware FW). Weiterhin umfasst das Steuergerät SG einen oder mehrere Speichermedien M (z.B. Arbeitsspeicher oder Flash-Speicher) zur Aufnahme von Applikationssoftware, Firmware FW bzw. Betriebssystem.

Heutzutage sind Controller bzw. Steuergeräte SG zunehmend mit einer lokalen Wireless-Service-Schnittstelle SS ausgestattet (z.B. WiFi, Bluetooth). Die Wireless Service-Schnittstelle SS muss für Servicezwecke vom Techniker manuell aktiviert werden und schaltet sich nach einem Timeout automatisch wieder ab, sodass die Wireless Service-Schnittstelle SS im Normalbetrieb dauernd deaktiviert ist (z.B. wegen Vorgaben der Gebäude-IT-Administration; als IT-Security-Schutzmaßnahme; oder weil geringerer Stromverbrauch durch ausgeschaltetes Funkmodul im Controller SG im Normalbetrieb).

Bisher wurde die Wireless Service-Schnittstelle SS über eine lokale Servicetaste ST auf dem Steuergerät SG (Controller) aktiviert. Durch schlecht zugängliche Montageorte des Steuergerät SG ist das Betätigen dieser Servicetaste ST zur Aktivierung der Wireless-Service-Schnittstelle SS durch einen Bediener B wiederum mühsam und zeitaufwändig (z.B. Panel demontieren, Decke öffnen). Mit Vorteil ist das Steuergerät SG daher eingerichtet, durch das empfangene Servicesignal SIG die Betätigung einer lokal am Steuergerät SG befindlichen Servicetaste ST zu simulieren und dadurch die drahtlose Serviceschnittstelle SS zu aktivieren. Bei der drahtlosen Serviceschnittstelle SS handelt es sich z.B. um eine Funkschnittstelle (z.B. WiFi-Schnittstelle).

Nach Aktivierung der drahtlosen Serviceschnittstelle SS ist das Steuergerät SG eingerichtet, über die drahtlose Serviceschnittstelle SS Daten (z.B. Firmware FW und/oder Applikationsprogramme) zu empfangen und/oder Daten zu senden. In der Darstellung gemäss Figur 1 befindet sich das Steuergerät SG nach Aktivieren der drahtlosen Serviceschnittstelle SS im WLAN-Netz eines exemplarischen Routers R. Nach Aktivieren der drahtlosen Serviceschnittstelle SS kann ein Benutzer B (z.B. Inbetriebnehmer oder Servicetechniker) über ein Tool T (z.B. mobiles Kommunikationsendgerät, Smartphone, Tablet-Computer, PC) Firmware FW oder ein Firmware-Update auf das Steuergerät SG laden. Durch das WLAN-Netz des Routers S wird die Kommunikationsverbindung KV zwischen dem Tool T (z.B. Engineering-Tool oder Inbetriebnahme-Werkzeug (Inbetriebnahme-Tool)) und dem Steuergerät SG aufgebaut.

Mit Vorteil ist das Steuergerät SG eingerichtet, nach Empfangen oder Senden der Daten FW, die drahtlose Serviceschnittstelle SS automatisch zu deaktivieren. Bei Daten kann es sich z.B. um Nutzdaten, Parameter, Konfigurationen, Applikationssoftware, und/oder Firmware FW handeln.

Mit Vorteil wird die drahtlose Serviceschnittstelle SS im Falle einer Nichtverwendung nach einer definierten Zeitperiode automatisch deaktiviert.

Es handelt sich beim Servicesignal SIG um eine feldbusspezifische Meldung für Service- und Inbetriebnahme-Zwecke, die durch Betätigen einer jeweiligen Programmiertaste PT1 - PT3 oder eines Service-Pins SP1 - SP3 am jeweiligen Feldgerät FG1 - FG3 erzeugt wurde.

Eine weitere vorteilhafte Ausgestaltung der Erfindung liegt darin, dass über das von einem Feldgerät FG1 - FG3 generiertes und an das Steuergerät SG gesendetes Servicesignal SIG die drahtlose Serviceschnittstelle des Steuergerätes deaktiviert wird. Die WiFi Schnittstelle des Steuergerätes (z.B. Controller) kann somit via Feldbus nicht nur eingeschaltet, sondern über einen weiteren Befehl auch manuell ausgeschaltet werden. Eine weitere vorteilhafte Ausgestaltung der Erfindung liegt darin, dass das Steuergerät SG eingerichtet ist, ein von einem Feldgerät FG1 - FG3 generiertes Servicesignal SIG' zu empfangen und basierend auf dem Servicesignal SIG' die drahtlose Serviceschnittstelle SS zu deaktivieren.

Figur 2 zeigt ein beispielhaftes Flussdiagramm für ein Verfahren zum Übertragen von Daten (z.B. Firmware, Firmware-Update) auf ein Steuergerät (z.B. Controller, Automationsgerät (Automation Device)), insbesondere für eine Gebäudeautomatisierung, für die Steuerung von einem oder mehreren Feldgeräten, die durch ein Kommunikationsnetzwerk, insbesondere durch einen Feldbus (z.B. Gebäudeinstallationsbus, KNX-Bus), mit dem Steuergerät datentechnisch verbunden sind,
(VS1) wobei über ein von einem Feldgerät (z.B. Aktor oder Sensor) generiertes und an das Steuergerät gesendetes Servicesignal eine drahtlose Serviceschnittstelle des Steuergerätes aktiviert wird, und
(VS2) wobei nach der Aktivierung der drahtlosen Serviceschnittstelle von einem Tool (z.B. Engineering-Tool oder Inbetriebnahme-Werkzeug (Inbetriebnahme-Tool)) Daten (z.B. Firmware) über die drahtlose Serviceschnittstelle (z.B. Funkschnittstelle, WiFi, WLAN) auf das Steuergerät transferiert werden.

Das Tool (Werkzeug) kann z.B. auf einem mobilen Kommunikationsendgerät, Smartphone, Tablet-Computer, PC realisiert sein.

Es wird durch das vom Steuergerät empfangene Servicesignal eine Betätigung einer lokal am Steuergerät befindlichen Servicetaste simuliert und dadurch die drahtlose Serviceschnittstelle des Steuergerätes aktiviert.

Mit Vorteil wird nach dem erfolgten Transfer der Daten die drahtlose Serviceschnittstelle automatisch deaktiviert.

Eine weitere vorteilhafte Ausgestaltung der Erfindung liegt darin, dass über das von einem Feldgerät FG1 - FG3 generierte und an das Steuergerät SG gesendete Servicesignal SIG die drahtlose Serviceschnittstelle des Steuergerätes deaktiviert wird. Die WiFi Schnittstelle des Steuergerätes (z.B. Controller) kann somit via Feldbus nicht nur eingeschaltet, sondern über einen weiteren Befehl auch manuell ausgeschaltet werden.

Mit Vorteil handelt es sich beim jeweiligen Servicesignal SIG um eine feldbusspezifische Meldung für Service- und Inbetriebnahme-Zwecke, die durch Betätigen einer Programmiertaste oder eines Service-Pins an einem Feldgerät erzeugt wurde.

Das Verfahren kann mit üblicherweise schon in einem Gebäude vorhandener Infrastruktur (z.B. WLAN-Router) realisiert werden.

### Beispielhaftes Szenario für die Verwendung des Verfahrens:

a) Jeder Controller (Steuergerät) steuert über einen Feldbus (z.B. KNX-Bus, Modbus, LON) ein oder mehrere Feldgeräte, welche im Raum einfach zugänglich sind - z.B. Raumbediengerät, Ventilantrieb.
b) Diese Feldgeräte sind über den entsprechenden Feldbus direkt mit dem Controller (Steuergerät) verbunden und verfügbar.
c) Am Feldbus ist generell nur ein Controller (Steuergerät) angeschlossen. Deshalb ist die Zuordnung zwischen Feldgerät und Controller eindeutig.
d) Die Feldgeräte haben in der Regel einen Service-Pin oder eine Programmiertaste. Beim Betätigen von Service Pin bzw. Programmtaste erzeugt das Feldgerät eine feldbusspezifische Meldung für Service- und Inbetriebnahme-Zwecke, welche zum Controller (Steuergerät) gesendet wird.
e) Diese Identifikationsmeldung vom Feldgerät wird vom Controller (Steuergerät) empfangen. Der Controller (Steuergerät) setzt dieses Signal um, indem er auf dem Controller (Steuergerät) das Betätigen der lokalen Servicetaste simuliert, so wie wenn jemand lokal am Controller (Steuergerät) die Servicetaste betätigt hätte.
f) Damit ist die Wireless-Service-Schnittstelle auf dem Controller (Steuergerät) für eine bestimmte Zeit eingeschaltet.
g) Der Controller (Steuergerät) kann auf dem Tool (Mobile Phone, Tablet, PC) durch das Erkennen des Wireless Netzwerkes (z.B. einer neuen WiFi SSID) einfach identifiziert werden.
h) Nach dem Verbinden des Tools (z.B. Engineering-Tool, Inbetriebnahme-Tool) mit der Wireless-Service-Schnittstelle kann das Laden grösserer Datenmengen auf den Controller (Steuergerät) sehr einfach und schnell erfolgen (z.B. für ein Firmware-Update).
i) Mit Vorteil schaltet die aktivierte Wireless-Service-Schnittstelle bei nicht Verwendung (nach einem Timout) automatisch ab.
j) Nach einem Reboot des Controllers (Steuergerät) ist die Wireless-Service-Schnittstelle nicht mehr eingeschaltet (z.B. Reboot nach erfolgreichem FW-Download).

Beispielhafte Vorteile der vorliegenden Erfindung:
- Durch die einfache und eindeutige remote Aktivierung der lokalen Wireless-Service-Schnittstelle kann der Service Techniker sehr schnell, effizient und sicher den richtigen Controller für den Raum identifizieren (lokalisieren) und direkt mit dem schnellen Download der erforderlichen Daten beginnen. Der Gebäudebackbone muss dazu nicht betriebsbereit sein.
- Die zeitaufwendige Lokalisierung des Controllers an schlecht zugänglichen Standorten und das Entfernen von Zwischendecken, Fensterpanelen oder Zwischenböden zum Anbringen eines USB Tool Kabels oder zum Betätigen der Servicetaste entfällt.
   - Service Einsätze im laufenden Betrieb werden deutlich vereinfacht und beschleunigt, weil die Daten mit hoher Geschwindigkeit über die Wireless-Service-Schnittstelle geladen werden können.
   - Durch das automatische Ausschalten der Wireless-Service-Schnittstelle mittels Timeout entfällt die manuelle Deaktivierung durch den Service-Techniker (welche oft vergessen wird) nach Abschluss der Service Arbeiten
   - Die Durchführung der Inbetriebnahme und Service Arbeiten wird erheblich schneller und zuverlässiger.

Steuergerät (z.B. Controller), insbesondere für eine Gebäudeautomatisierung, für die Steuerung von einem oder mehreren Feldgeräten, die durch ein Kommunikationsnetzwerk, insbesondere durch einen Feldbus, mit dem Steuergerät datentechnisch verbunden sind, wobei das Steuergerät eine drahtlose Serviceschnittstelle (Wireless-Service-Schnittstelle, z.B. WiFi-Schnittstelle) umfasst, wobei das Steuergerät eingerichtet ist, ein von einem Feldgerät generiertes Servicesignal zu empfangen und basierend auf dem Servicesignal die drahtlose Serviceschnittstelle zu aktivieren (bzw. einzuschalten). Verfahren zum Übertragen von Daten auf ein Steuergerät, für die Steuerung von einem oder mehreren Feldgeräten, die durch ein Kommunikationsnetzwerk, insbesondere durch einen Feldbus, mit dem Steuergerät datentechnisch verbunden sind, wobei über ein von einem Feldgerät generiertes und an das Steuergerät gesendetes Servicesignal eine drahtlose Serviceschnittstelle des Steuergerätes aktiviert wird, wobei nach der Aktivierung der drahtlosen Serviceschnittstelle von einem Tool (z.B. Engineering-Tool, Inbetriebnahme-Tool) Daten über die drahtlose Serviceschnittstelle auf das Steuergerät transferiert werden.

### Bezugszeichen

- SG: Steuergerät
- ST: Servicetaste
- SS: Serviceschnittstelle
- P: Prozessor
- M: Speicher
- R: Router
- WLAN: Wireless Netzwerk
- KV: Kommunikationsverbindung
- KN: Kommunikationsnetzwerk
- FG1 - FG3: Feldgerät
- PT1 - PT3: Programmiertaste
- SP1 - SP3: Service-Pin
- SIG, SIG': Servicesignal
- T: Tool
- B: Benutzer
- FW: Firmware
- VS1, VS2: Verfahrensschritt

## Patentansprüche

1. Steuergerät (SG) für eine Gebäudeautomatisierung, für die Steuerung von einem oder mehreren Feldgeräten (FG1 - FG3), die durch einen Feldbus (KN) mit dem Steuergerät (SG) datentechnisch verbunden sind,
wobei das Steuergerät (SG) eine drahtlose Serviceschnittstelle (SS) umfasst,
**dadurch gekennzeichnet, dass**
das Steuergerät (SG) eingerichtet ist, ein von einem Feldgerät (FG1 - FG3) generiertes Servicesignal (SIG) zu empfangen und basierend auf dem Servicesignal (SIG) die drahtlose Serviceschnittstelle (SS) zu aktivieren,
wobei es sich beim Servicesignal (SIG) um eine feldbusspezifische Meldung für Service- und Inbetriebnahme-Zwecke handelt, die durch Betätigen einer Programmiertaste (PT1 - PT3) oder eines Service-Pins (SP1 - SP3) an einem Feldgerät (FG1 - FG3) erzeugt wurde;
wobei das Steuergerät (SG) ausgestaltet ist, das Servicesignal (SIG) umzusetzen, indem es auf dem Steuergerät (SG) das Betätigen einer lokalen Servicetaste simuliert.

2. Steuergerät (SG) nach Anspruch 1, wobei das Steuergerät (SG) eingerichtet ist, durch das empfangene Servicesignal die Betätigung einer lokal am Steuergerät (SG) befindlichen Servicetaste (ST) zu simulieren und dadurch die drahtlose Serviceschnittstelle (SS) zu aktivieren.

3. Steuergerät (SG) nach einem der vorstehenden Ansprüche, wobei nach Aktivierung der drahtlosen Serviceschnittstelle (SS) das Steuergerät (SG) eingerichtet ist, über die drahtlose Serviceschnittstelle (SS) Daten (FW) zu empfangen und/oder Daten zu senden.

4. Steuergerät (SG) nach Anspruch 3, wobei das Steuergerät (SG) eingerichtet ist, nach Empfangen oder Senden der Daten (FW), die drahtlose Serviceschnittstelle (SS) automatisch zu deaktivieren.

5. Steuergerät (SG) nach einem der vorstehenden Ansprüche, wobei die drahtlose Serviceschnittstelle (SS) im Falle einer Nichtverwendung nach einer definierten Zeitperiode automatisch deaktiviert wird.

6. Steuergerät (SG) nach einem der vorstehenden Ansprüche, wobei das Steuergerät (SG) eingerichtet ist, ein von einem Feldgerät (FG1 - FG3) generiertes weiteres Servicesignal (SIG') zu empfangen und basierend auf dem weiteren Servicesignal (SIG') die drahtlose Serviceschnittstelle (SS) zu deaktivieren.

7. Verfahren zum Übertragen von Daten auf ein Steuergerät (SG) für eine Gebäudeautomatisierung, für die Steuerung von einem oder mehreren Feldgeräten (FG1 - FG3), die durch einen Feldbus (KN) mit dem Steuergerät (SG) datentechnisch verbunden sind,
wobei über ein von einem Feldgerät (FG1 - FG3) generiertes und an das Steuergerät (SG) gesendetes Servicesignal eine drahtlose Serviceschnittstelle (SS) des Steuergerätes (SG) aktiviert wird,
wobei nach der Aktivierung der drahtlosen Serviceschnittstelle von einem Tool (T) Daten über die drahtlose Serviceschnittstelle (SS) auf das Steuergerät (SG) transferiert werden,
wobei es sich beim Servicesignal (SIG, SIG') um eine feldbusspezifische Meldung für Service- und Inbetriebnahme-Zwecke handelt, die durch Betätigen einer Programmiertaste (PT1 - PT3) oder eines Service-Pins (SP1 - SP3) an einem Feldgerät (FG1 - FG3) erzeugt wurde.

8. Verfahren nach Anspruch 7, wobei durch das vom Steuergerät (SG) empfangene Servicesignal (SIG) eine Betätigung einer lokal am Steuergerät (SG) befindlichen Servicetaste (ST) simuliert wird und dadurch die drahtlose Serviceschnittstelle (SS) des Steuergerätes (SG) aktiviert wird.

9. Verfahren nach Anspruch 7 oder 8, wobei nach dem erfolgten Transfer der Daten (FW) die drahtlose Serviceschnittstelle (SS) automatisch deaktiviert wird.

10. Verfahren nach einem der Ansprüche 7 bis 9, wobei über ein von einem Feldgerät (FG1 - FG3) generiertes und an das Steuergerät (SG) gesendetes weiteres Servicesignal (SIG') die drahtlose Serviceschnittstelle (SS) des Steuergerätes (SG) deaktiviert wird.

11. Kommunikationsnetzwerk umfassend Mittel zur Ausführung des Verfahrens nach Anspruch 7.

## Claims

1. Control device (SG) for building automation, for controlling one or more field devices (FG1 - FG3), which are connected in a data-transmitting manner to the control device (SG) via a field bus (KN),
wherein the control device (SG) comprises a wireless service interface (SS),
**characterised in that**
the control device (SG) is designed to receive a service signal (SIG) generated by a field device (FG1 - FG3) and to activate the wireless service interface (SS) on the basis of the service signal (SIG),
wherein the service signal (SIG) is a field bus-specific message for service and commissioning purposes which was generated by activating a programming button (PT1 - PT3) or a service pin (SP1 - SP3) on a field device (FG1 - FG3);
wherein the control device (SG) is configured to convert the service signal (SIG) by simulating the activation of a local service button on the control device (SG).

2. Control device (SG) according to claim 1, wherein the control device (SG) is designed to simulate the activation of a service button (ST) located locally on the control device (SG) by means of the service signal received and thereby to activate the wireless service interface (SS).

3. Control device (SG) according to one of the preceding claims, wherein after activation of the wireless service interface (SS), the control device (SG) is designed to receive data (FW) and/or transmit data via the wireless service interface (SS).

4. Control device (SG) according to claim 3, wherein the control device (SG) is designed to automatically deactivate the wireless service interface (SS) after receiving or transmitting the data (FW).

5. Control device (SG) according to one of the preceding claims, wherein the wireless service interface (SS) is automatically deactivated after a defined period of time if it is not used.

6. Control device (SG) according to one of the preceding claims, wherein the control device (SG) is designed to receive a further service signal (SIG') generated by a field device (FG1 - FG3) and to deactivate the wireless service interface (SS) on the basis of the further service signal (SIG').

7. Method for transmitting data to a control device (SG) for building automation, for controlling one or more field devices (FG1 - FG3) which are connected in a data-transmitting manner to the control device (SG) via a field bus (KN),
wherein a wireless service interface (SS) of the control device (SG) is activated via a service signal generated by a field device (FG1 - FG3) and transmitted to the control device (SG),
wherein data is transferred to the control device (SG) via the wireless service interface (SS) after the activation of the wireless service interface by a tool (T),
wherein the service signal (SIG, SIG') is a field bus-specific message for service and commissioning purposes which was generated by activating a programming button (PT1 - PT3) or a service pin (SP1 - SP3) on a field device (FG1 - FG3).

8. Method according to claim 7, wherein activation of a service button (ST) located locally on the control device (SG) is simulated by the service signal (SIG) received from the control device (SG) and thereby the wireless service interface (SS) of the control device (SG) is activated.

9. Method according to claim 7 or 8, wherein the wireless service interface (SS) is automatically deactivated after the data has been transferred (FW).

10. Method according to one of claims 7 to 9, wherein the wireless service interface (SS) of the control device (SG) is deactivated via a further service signal (SIG') generated by a field device (FG1 - FG3) and sent to the control device (SG).

11. Communications network comprising means for carrying out the method according to claim 7.

## Revendications

1. Appareil de commande (SG) pour une automatisation de bâtiments, pour la commande d'un ou de plusieurs appareils de terrain (FG1 - FG3), lesquels sont reliés par transmission de données à l'appareil de commande (SG) par le biais d'un bus de terrain (KN),
l'appareil de commande (SG) comportant une interface de service (SS) sans fil,
**caractérisé en ce que**
l'appareil de commande (SG) est conçu pour recevoir un signal de service (SIG) généré par un appareil de terrain (FG1 - FG3) et pour activer l'interface de service (SS) sans fil sur la base du signal de service (SIG),
dans lequel, pour ce qui est du signal de service (SIG), il s'agit d'un message spécifique à un bus de terrain à des fins de service et de mise en fonctionnement, lequel message a été produit par actionnement d'une touche de programmation (PT1 - PT3) ou d'un code de service (SP1 - SP3) au niveau d'un appareil de terrain (FG1 - FG3) ;
l'appareil de commande (SG) étant configuré pour convertir le signal de service (SIG) par le fait qu'il simule l'actionnement d'une touche de service locale sur l'appareil de commande (SG).

2. Appareil de commande (SG) selon la revendication 1, l'appareil de commande (SG) étant conçu pour simuler, par le biais du signal de service reçu, l'actionnement d'une touche de service (ST) se trouvant localement au niveau de l'appareil de commande (SG) et pour activer ainsi l'interface de service (SS) sans fil.

3. Appareil de commande (SG) selon l'une des revendications précédentes, l'appareil de commande (SG) étant conçu, après activation de l'interface de service (SS) sans fil, pour recevoir des données (FW) et/ou pour envoyer par l'intermédiaire de l'interface de service (SS) sans fil.

4. Appareil de commande (SG) selon la revendication 3, l'appareil de commande (SG) étant conçu, après réception ou envoi des données (FW), pour désactiver automatiquement l'interface de service (SS) sans fil.

5. Appareil de commande (SG) selon l'une des revendications précédentes, dans lequel l'interface de service (SS) sans fil est désactivée automatiquement dans le cas d'une non-utilisation après une période de temps définie.

6. Appareil de commande (SG) selon l'une des revendications précédentes, l'appareil de commande (SG) étant conçu pour recevoir un autre signal de service (SIG') généré par un appareil de terrain (FG1 - FG3) et pour désactiver l'interface de service (SS) sans fil sur la base de l'autre signal de service (SIG').

7. Procédé pour la transmission de données à un appareil de commande (SG) pour une automatisation de bâtiments, pour la commande d'un ou de plusieurs appareils de terrain (FG1 - FG3), lesquels sont reliés par transmission de données à l'appareil de commande (SG) par le biais d'un bus de terrain (KN),
dans lequel une interface de service (SS) sans fil de l'appareil de commande (SG) est activée par l'intermédiaire d'un signal de service généré par un appareil de terrain (FG1 - FG3) et envoyé à l'appareil de commande (SG),
dans lequel, après activation de l'interface de service sans fil par un utilitaire (T), des données sont transférées à l'appareil de commande (SG) par l'intermédiaire de l'interface de service (SS) sans fil,
dans lequel, pour ce qui est du signal de service (SIG, SIG'), il s'agit d'un message spécifique à un bus de terrain à des fins de service et de mise en fonctionnement, lequel message a été produit par actionnement d'une touche de programmation (PT1 - PT3) ou d'un code de service (SP1 - SP3) au niveau d'un appareil de terrain (FG1 - FG3).

8. Procédé selon la revendication 7, dans lequel un actionnement d'une touche de service (ST) se trouvant localement au niveau de l'appareil de commande (SG) est simulé par le biais du signal de service (SIG) reçu par l'appareil de commande (SG) et l'interface de service (SS) sans fil de l'appareil de commande (SG) est ainsi activée.

9. Procédé selon la revendication 7 ou 8, dans lequel, après le transfert réussi des données (FW), l'interface de service (SS) sans fil est désactivée automatiquement.

10. Procédé selon l'une des revendications 7 à 9, dans lequel l'interface de service (SS) sans fil de l'appareil de commande (SG) est désactivée par l'intermédiaire d'un autre signal de service (SIG') généré par un appareil de terrain (FG1 FG3) et envoyé à l'appareil de commande (SG).

11. Réseau de communication comportant des moyens pour la mise en œuvre du procédé selon la revendication 7.
